# EUROPEAN PATENT APPLICATION

(11) **EP 2 016 988 A1**
(43) Date of publication of application: **21.01.2009**
(21) Application number: 07112769.0
(22) Date of filing: 19.07.2007
(51) Int. Cl.: B01D 33/11, B01D 33/52

(54) **Metallurgical granulation and dewatering apparatus**

(71) Applicant: PAUL WURTH S.A., 1122 Luxembourg (LU)
(72) Inventor: Leyser, Patrick, 5898 Syren (LU); Cortina, Christian, 3937, Mondercange (LU); Greiveldinger, Bob, 2416, Howald (LU); Kerschenmeyer, Guy, 8381, Kleinbettingen (LU); Schweitzer, Marc, 2614, Luxembourg (LU)
(74) Representative: Lambert, Romain Ramon

(57) **Abstract**

The present invention proposes a metallurgical granulation and dewatering apparatus (10) comprising a hollow drum (12) being rotatably mounted about an axis (16), the drum (12) being formed by a drum wall (20) comprising mesh material (41). The apparatus (10) further comprises feed means (46) for feeding granulated slag into a lower region (22) of the drum (12) and onto an inner surface (32) of the drum wall (20), the lower region (22) of the drum (12) comprising a slag/water slurry; and drive means for rotating the drum (12) about the axis (16), the rotation of the drum (12) causing the slurry to be entrained from the lower region (22) of the drum (12) to an upper region (24) of the drum (12), the water being drained away through the mesh material (41). The apparatus (10) also comprises collector means (48) arranged in the drum (12) at a location below the upper region (24) of the drum (12), the collector means (48) being arranged for catching slag and conveying the slag out of the drum (12); and cleaning means for cleaning the mesh material (41), the cleaning means being arranged outside the drum (12) and comprising nozzles (44) directed onto the outer surface (42) of the mesh material (41). According to an important aspect of the invention, the mesh material (41) is flexible mesh material and the nozzles (44) of the cleaning means are high-pressure water nozzles (44) for directing high-pressure water jets onto the outer surface (42) of the flexible mesh material (41); wherein the flexible mesh material (41) is configured and arranged so as to be able to bulge inwardly when subjected to water from the high-pressure water nozzles (44).

## Description

### TECHNICAL FIELD

The present invention generally relates to a metallurgical granulation and dewatering apparatus, in particular for granulating molten slag from a blast furnace and for removing water from the granulated slag. The granulated slag is then recovered and transported away for use elsewhere.

### BACKGROUND ART

Slag, such as produced by a blast furnace, is a valuable byproduct of the smelting operation. The molten slag is generally mixed with water, which serves to cool down the molten slag and to break it up into granules. From the mixture of water and slag, generally called slurry, it is necessary to separate the water from the granulated slag, so that the latter can be stored, transported and used.

A metallurgical granulation and dewatering apparatus is e.g. known from US 4,204,855. Such a granulation and dewatering apparatus comprises a hollow rotary drum, rotatably mounted about a central axis. The drum wall is formed in a foraminous material, allowing water to drain away. The apparatus is provided with means for feeding slag into a lower region of the hollow drum and onto the inner surface of the drum wall. Upon rotation of the drum, the slurry containing the slag is entrained from the lower region of the drum towards an upper region of the drum, while water is drained away. In the upper region of the drum, the dewatered granulated slag is allowed to fall under gravitational force onto a conveyor for catching the granulated slag and conveying it out of the hollow drum.

One problem encountered with such an apparatus is that the slurry entrained by the drum may stick on the inner surface of the drum wall and in particular in the openings of the foraminous material. It has therefore been suggested to spray a fluid, generally air at about 5 to 6 bar or water at about 7 to 10 bar, onto the outside surface of the hollow drum in order to remove the slurry from the drum wall before it reaches the lower region of the drum to pick up more slurry.

Although such cleaning systems may help to reduce the build-up of slurry on the inner wall of the hollow drum, it has been found that the cleaning effect of these systems is insufficient and clogging of the pores of the foraminous material is not prevented.

### OBJECT OF THE INVENTION

The object of the present invention is to provide an improved metallurgical granulation and dewatering apparatus, wherein cleaning of the drum walls is improved. This object is achieved by an apparatus as claimed in claim 1.

### GENERAL DESCRIPTION OF THE INVENTION

The present invention proposes a metallurgical granulation and dewatering apparatus, in particular for recovering granulated slag from a blast furnace, the metallurgical granulation and dewatering apparatus comprising a hollow drum being rotatably mounted about an axis, the drum being formed by a drum wall comprising mesh material. The apparatus further comprises feed means for feeding granulated slag into a lower region of the drum and onto an inner surface of the drum wall, the lower region of the drum comprising a slag/water slurry; and drive means for rotating the drum about the axis, the rotation of the drum causing the slurry to be entrained from the lower region of the drum to an upper region of the drum, the water being drained away through the mesh material. The apparatus also comprises collector means arranged in the drum at a location below the upper region of the drum, the collector means being arranged for catching slag and conveying the slag out of the drum; and cleaning means for cleaning the mesh material, the cleaning means being arranged outside the drum and comprising nozzles directed onto the outer surface of the mesh material. According to an important aspect of the invention, the mesh material is flexible mesh material and the nozzles of the cleaning means are high-pressure water nozzles for directing high-pressure water jets onto the outer surface of the flexible mesh material; wherein the flexible mesh material is configured and arranged so as to be able to bulge inwardly when subjected to water from the high-pressure water nozzles.

It has been found that the interaction between flexible mesh material and high-pressure water jets provides a very efficient cleaning of the mesh material. Indeed, as the flexible mesh material passes in the path of the high-pressure water jets, the mesh material bulges radially inwards. The movement of the mesh structure, together with the high-pressure water jet, provides an increased loosening of any slurry on the mesh material and thereby leads to an improved cleaning of the mesh material.

According to a preferred embodiment of the invention, the apparatus further comprises a plurality of inwardly projecting vanes on the inner surface of the drum wall, the vanes being configured and arranged so as to entrain the slurry towards the upper region of the drum upon rotation of the drum. Such vanes improve the entrainment of the slurry towards the upper region of the drum, thereby increasing the efficiency of the apparatus. Preferably, the vanes at least partially have a mesh structure, thereby facilitating the removal of water from the entrained slurry.

Advantageously, the high-pressure water nozzles are configured and arranged so as to direct high-pressure water jets onto the drum at a location downstream of where the slag falls onto the collector means. After the granulated slag is dropped from a particular area of the mesh material onto the collector means, that area passes in front of the high-pressure water nozzles before it reaches the lower region of the drum to pick up more slurry. The high-pressure water nozzles are preferably configured and arranged so as to produce water jets at a pressure higher than 40 bar, preferably higher than 50 bar.

Preferably, the hollow drum comprises a support structure having a frame for receiving the mesh material thereon. The frame may be a regular grid of peripheral and longitudinal metal bars defining the wall of the hollow drum, wherein the metal bars are arranged in such a way as to receive the mesh material.

The support structure may further comprise rigid support material having a mesh structure, the flexible mesh material being arranged along the inside surface of the rigid support material. Such rigid support material, e.g. in the form of support panels, allow to reinforce the support structure and hence the hollow drum. The support material also allows preventing the flexible mesh material from falling out of the hollow drum.

The rigid support material preferably has a mesh size that is substantially bigger than the mesh size of the flexible mesh material.

Advantageously, the mesh material is sandwiched between the support material and the support structure. The flexible mesh material is thereby rigidly connected, at its intersections with the frame of the support structure, with the support structure and only central portions of the mesh material remain flexible. This does not only allow the flexible mesh material to stay in place, it also allows creating smaller bulging zones.

Preferably, the flexible mesh material is removably attached to the support structure. If need be, the flexible mesh material can then be removed and replaced easily and quickly.

According to a particularly advantageous embodiment, the mesh material is provided in the form of a plurality of mesh panels. Such mesh panels are preferably dimensioned so as to have their edges in contact with the frame of the support structure.

### BRIEF DESCRIPTION OF THE DRAWINGS

The present invention will be more apparent from the following description of a non-limiting embodiment with reference to the attached drawings, wherein:
FIG. 1: is a schematic representation of a metallurgical granulation and dewatering apparatus according to the present invention; and
FIG. 2: is an enlarged cross-sectional view of a section of the drum wall of the apparatus of Fig.1.

### DETAILED DESCRIPTION OF PREFERRED EMBODIMENTS

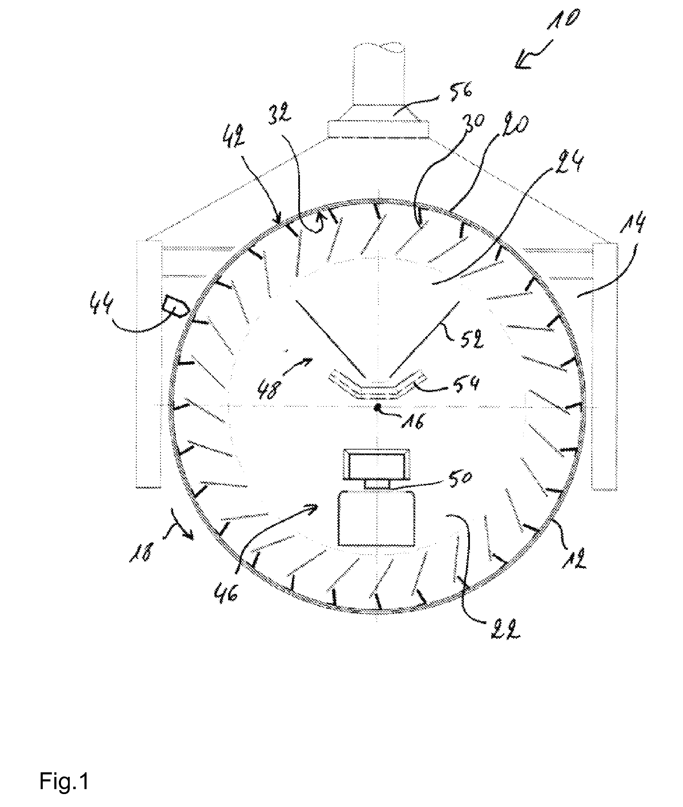

Fig.1 shows a metallurgical granulation and dewatering apparatus 10 according to the invention, wherein a hollow drum 12 is arranged inside a chamber 14. The drum is arranged so as to be rotatable about a central axis 16 and is coupled to a motor (not shown) for rotating the drum 12 in a direction as indicated by arrow 18.

Such a drum 12 typically comprises a drum wall 20 formed in a foraminous material, allowing water to drain away. The drum 12 generally has a lower region 22 comprising a slag/water slurry and an upper region 24 where slag material entrained by the rotating drum 12 falls away from the drum wall 20.

A drum 12, according to a preferred embodiment of the invention, comprises a support structure with a frame constructed from a plurality of peripheral and longitudinal metal bars for defining the drum wall 30. Rigid support panels having a mesh structure are arranged in the spaces defined between the peripheral and longitudinal metal bars. Together with the frame, the support panels form a solid drum wall. The drum wall further comprises an inner lining of mesh material in the form of mesh panels. The mesh panels have relatively small mesh size, whereas the support panels have substantially larger mesh size. Such mesh panels are designed to carry the slag/water slurry and to allow the water to drain away from the slurry through the mesh panels while still carrying the granulated slag.

A plurality of inwardly projecting vanes 30 is arranged on the inner surface 32 of the drum wall 20. These vanes 30 are configured and arranged so as to, upon rotation of the drum 12, entrain the slurry from the lower region 22 towards the upper region 24 of the drum 12. The vanes 30 preferably also have a mesh structure in order to allow water to drain away from the entrained slurry.

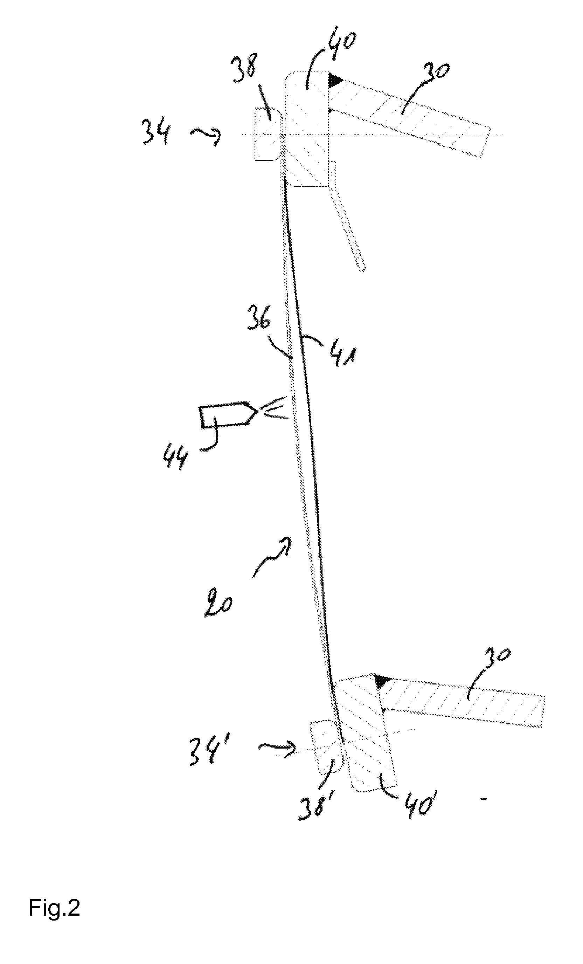

The structure of the drum wall 20 can be more closely described by referring to Fig.2, which shows an enlarged cross-sectional view of a section of drum wall 20. This figure shows two neighbouring longitudinal metal bars 34, 34' and a rigid support panel 36 arranged therebetween. Each longitudinal metal bar 34, 34' comprises an outer part 38, 38' and an inner part 40, 40', edge portions of the support panel 36 being sandwiched therebetween. The inner part 40, 40' may also carry the vanes 30 thereon.

The rigid support panel 36 is internally lined with a mesh panel 41, which has its edge portions sandwiched between the rigid support panel 36 and the inner part 40, 40' of the metal bars 34, 34'. According to the present invention, the mesh panel 41 is a flexible mesh panel, which, when subjected to a jet of water at high pressure bulges inwardly as seen on Fig.2. This bulging of the flexible mesh panel 41 ensures that any slag or slurry on the mesh panel 41 is removed before the mesh panel 41 returns to the lower region 22 of the drum 12 to entrain more slurry. As a consequence, the mesh panels 41 are continuously cleaned and their pores are prevented from clogging. The mesh panels 41 hence have a longer lifetime and maintenance stoppages, in order to replace or clean mesh panels 41, can be reduced.

The jet of water at high pressure is delivered to the outside surface 42 of the drum 12 by means of a high-pressure water nozzle 44. A plurality of such nozzles 44 is arranged in a longitudinal array, laterally of the hollow drum 12 on the side of the drum 12 where the panels 36, 41 move in a downward direction as can be seen by referring back to Fig.1. The nozzles 44 are arranged between the upper region 24 where slag material entrained by the rotating drum 12 falls away from the drum wall 20 and the lower region 22 comprising the slag/water slurry.

As can be seen on Fig.1, the apparatus 10 further comprises feed means 46 for feeding molten slag into the drum 12 and collector means 48 for removing granulated slag from the drum 12. The feed means 46 e.g. comprises a pouring trough 50, which may be tilted to feed molten slag into the lower region 22 of the hollow drum 12, uniformly over substantially the entire axial length of the drum 12. The collector means 48 is arranged above the feed means 46 and extends over substantially the entire axial length of the drum 12. It comprises a funnel 52 for collecting the granulated slag falling off the drum wall 20 in the upper region 24 of the drum 12 , the funnel 52 feeding the granulated slag onto a collector plate 54 for carrying the collected granulated slag out of the hollow drum 12.

For the sake of completeness, it may be mentioned that the apparatus 10 further comprises an exhaust hood 56 for collecting any vapours from the metallurgical granulation and dewatering apparatus and a collecting basin (not shown) under the drum 12 for collecting and evacuating the water drained from the slurry.

Upon rotation of the drum, the slag containing slurry is entrained by the drum wall 20 and the vanes 30 attached thereto from the lower region 22 of the drum 12 towards the upper region 24 of the drum 12, while water is drained away. In the upper region of the drum 12, the dewatered granulated slag is allowed to fall under gravitational force into the funnel 52 and onto the collector plate 54 for catching the dewatered granulated slag and conveying it out of the hollow drum 12.

### REFERENCE SIGNS

- 10: metallurgical granulation and dewatering apparatus
- 12: hollow drum
- 14: chamber
- 16: central axis
- 18: direction of rotation
- 20: drum wall
- 22: lower region
- 24: upper region
- 34, 34': longitudinal metal bar
- 30: vane
- 32: inner surface of drum
- 36: support panel
- 38, 38': outer part
- 40, 40': inner part
- 41: mesh panel
- 42: outside surface of drum
- 44: high-pressure water nozzle
- 46: feed means
- 48: collector means
- 50: pouring trough
- 52: funnel
- 54: collector plate
- 56: exhaust hood

## Claims

1. Metallurgical granulation and dewatering apparatus, in particular for recovering granulated slag from a blast furnace, said metallurgical granulation and dewatering apparatus comprising:
a hollow drum being rotatably mounted about an axis, said drum being formed by a drum wall comprising mesh material;
feed means for feeding granulated slag into a lower region of said drum and onto an inner surface of said drum wall, said lower region of said drum comprising a slag/water slurry;
drive means for rotating said drum about said axis, the rotation of said drum causing said slurry to be entrained from said lower region of said drum to an upper region of said drum, said water being drained away through said mesh material;
collector means arranged in said drum at a location below said upper region of said drum, said collector means being arranged for catching slag and conveying said slag out of said drum; and
cleaning means for cleaning said mesh material, said cleaning means being arranged outside said drum and comprising nozzles directed onto said outer surface of said mesh material
**characterised in that**
said mesh material is flexible mesh material;
said nozzles of said cleaning means are high-pressure water nozzles for directing high-pressure water jets onto said outer surface of said flexible mesh material;
wherein said flexible mesh material is configured and arranged so as to be able to bulge inwardly when subjected to water from said high-pressure water nozzles.

2. Apparatus according to claim 1, further comprising a plurality of inwardly projecting vanes on said inner surface of said drum wall, said vanes being configured and arranged so as to entrain said slurry towards said upper region of said drum upon rotation of said drum.

3. Apparatus according to claim 2, wherein said vanes at least partially have a mesh structure.

4. Apparatus according to any of claims 1 to 3, wherein said high-pressure water nozzles are configured and arranged so as to direct high-pressure water jets onto said drum at a location downstream of where said slag falls onto said collector means.

5. Apparatus according to any of claims 1 to 4, wherein said high-pressure water nozzles are configured and arranged so as to produce water jets at a pressure higher than 40 bar, preferably higher than 50 bar.

6. Apparatus according to any of claims 1 to 5, wherein said drum comprises a support structure, said support structure comprising a frame for receiving said mesh material thereon.

7. Apparatus according to claim 6, wherein said support structure further comprises rigid support material having a mesh structure, said flexible mesh material being arranged along the inside surface of said rigid support material.

8. Apparatus according to claim 7, wherein said support material has a mesh size that is substantially bigger than the mesh size of said mesh material.

9. Apparatus according to any of claims 7 or 8, wherein said mesh material is sandwiched between said support material and said support structure.

10. Apparatus according to any of claims 7 to 9, wherein said mesh material is removably attached to said support structure.

11. Apparatus according to any of the previous claims, wherein said mesh material is provided in the form of a plurality of mesh panels.

12. Apparatus according to any of claims 6 to 11, wherein said mesh panels are dimensioned so as to have their edges in contact with said frame of said support structure.
